(19) Europäisches Patentamt
European Patent Office
Office européen des brevets

(11) **EP 1 094 986 B1**

(12) **EUROPEAN PATENT SPECIFICATION**

(45) Date of publication and mention
of the grant of the patent:
**09.02.2005 Bulletin 2005/06**

(51) Int Cl.⁷: $C02F\ 1/28$, $C02F\ 1/50$, $C02F\ 9/00$, $C01B\ 31/10$, $B01D\ 39/20$

(21) Application number: **99911933.2**

(22) Date of filing: **23.03.1999**

(86) International application number:
**PCT/GB1999/000914**

(87) International publication number:
**WO 2000/002816 (20.01.2000 Gazette 2000/03)**

(54) **WATER PURIFICATION SYSTEM AND METHOD**

WASSERREINIGUNGSSYSTEM UND VERFAHREN

SYSTEME ET PROCEDE D'EPURATION D'EAU

(84) Designated Contracting States:
**AT BE CH CY DE DK ES FI FR GB GR IE IT LI LU MC NL PT SE**

(30) Priority: **09.07.1998 GB 9814921**
**12.11.1998 GB 9825092**

(43) Date of publication of application:
**02.05.2001 Bulletin 2001/18**

(73) Proprietor: **Clear Water 42 Holding ASA**
**1367 Snaroya (NO)**

(72) Inventor: **KIRKPATRICK, Alan**
**Edinburgh EH3 6DW (GB)**

(74) Representative: **Dee, Ian Mark et al**
**Eric Potter Clarkson,**
**Park View House,**
**58 The Ropewalk**
**Nottingham NG1 5DD (GB)**

(56) References cited:
**EP-A- 0 322 932**     **EP-A- 0 633 051**
**EP-A- 0 648 535**     **EP-A- 0 755 994**
**WO-A-97/06879**      **DE-C- 4 416 576**
**US-A- 4 063 893**     **US-A- 5 156 335**
**US-A- 5 443 735**     **US-A- 5 446 378**
**US-A- 5 726 118**     **US-A- 5 750 026**

## Description

The present invention relates generally to water purification and to water purification systems.

The use of activated carbon in water purification systems to remove organic contaminants and chlorine contained in the water is conventional. The activated carbon is typically granular, but it can also be powdered and cast into porous blocks or cylinders.

Water purification systems comprising porous ceramic filter elements are also known. The ceramic filter elements in these systems typically comprise pores having a size across their largest dimension in the range of from 0.7 to 1.0 micron ($\mu$m). The size of the pores is small enough to remove 99.0 to 99.9% of most pathogenic bacteria, but it is not small enough to guarantee protection from water borne diseases. Furthermore, although it is possible to make ceramic filter elements with smaller pore sizes, e.g. down to 0.2 micron, these elements tend to be too fragile to be safely used in water purification systems where a crack in the element could be fatal.

It is also known to use redox alloys of zinc and copper in the purification of water. These materials exhibit the ability to remove toxic metal ions and chlorine contaminating water by losing electrons to or gaining electrons from the contaminants. However, the alloys suffer from the disadvantage that they release zinc and copper into the water which are themselves detrimental to human health and, therefore, can only be used in small quantities.

Other known methods for sterilising water involve the use of chlorine, iodine, ozone and ultra violet radiation.

According to the present invention there is provided a water purification system according to claim 1 and a method for purifying water according to claim 24.

The water purification system comprises an activated carbon filter including a particulate activated carbon containing particles of water insoluble ash in an amount of at least 1% by weight as determined in accordance with ASTM 2866.

This filter is preferably a water filter and typically takes the form of a filter cartridge comprising a chamber which contains the activated carbon as a bed or layer.

The activated carbon has an affinity for positively charged metal ions (cations), such as chromium and zinc, which can have certain advantages when the carbon is used in a water purification system alongside a redox alloy. These advantages are discussed hereinafter. Preferably, the activated carbon has an affinity for zinc.

In a preferred embodiment, the particulate activated carbon is in platelet form. The platelets of activated carbon preferably have a mean thickness in the range of from 0.02 to 0.2 mm, a mean particle size across their largest dimension in the range of from 0.2 to 0.6 mm and an aspect ratio (by which is meant the ratio of the largest dimension to the thickness for the platelets) in the range of from 20:1 to 10:3. More preferably, the activated carbon platelets have a mean thickness in the range of from 0.05 to 0.1 mm; a mean particle size across their largest dimension in the range of from 0.25 to 0.55 mm, particularly in the range of from 0.32 to 0.52 mm; and an aspect ratio in the range of from 25:2 to 4:1, particularly in the range of from 10:1 to 20:3.

The ash which is contained in the activated carbon is a fully combusted residue which is produced as a result of the small amount of oxygen which is present during the activation process.

The ash content of the activated carbon determined in accordance with ASTM 2866 is preferably in the range of from 1 to 20 % by weight, more preferably in the range of from 2 to 12 % by weight, particularly in the range of from 3 to 7 % by weight and especially in the range of from 4 to 6 % by weight, e.g. 5 to 6 % by weight. The ash is preferably constituted by substantially spherical particles and these particles typically have a mean size across their largest dimension in the range of from 0.1 to 1.0 $\mu$m, preferably in the range of from 0.2 to 0.5 $\mu$m and particularly in the range of from 0.3 to 0.4 $\mu$m. ASTM 2866 can be found in Coal ASTM Book of Standards.

The iodine number of the activated carbon is typically in the range of from 1000 to 1400 mg/g, preferably in the range of from 1100 to 1300 mg/g and particularly in the range of from 1250 to 1300 mg/g.

The activated carbon also preferably has a specific surface area as determined in accordance with the nitrogen BET isotherm method in the range of from 1000 to 1400 $m^2$/g, more preferably in the range of from 1100 to 1300 $m^2$/g and particularly in the range of from 1175 to 1200 $m^2$/g; a pore volume as determined in accordance with ASTM 3838 in the range of from 0.5 to 0.7 ml/g, more preferably in the range of from 0.55 to 0.65 ml/g and particularly in the range of from 0.6 to 0.62 ml/g; a hardness as determined in accordance with ASTM 3802 in the range of from 90 to 100%, more preferably in the range of from 95 to 100 % and particularly in the range of from 98 to 100 %; a K value gold loading as determined in accordance with the AARL method in the range of from 15 to 30 mg Au/g, more preferably in the range of from 20 to 25 mg Au/g and particularly in the range of from 23 to 25 mg Au/g; and an R value gold kinetics as determined in accordance with the AARL method in the range. of from 45 to 75 %, more preferably in the range of from 50 to 70 % and particularly in the range of from 55 to 60 %.

The activated carbon is derived from coconut shells by burning the shells to produce carbon and then subjecting the resulting coconut shell carbon to an activation process in which it is superheated in an environment typically containing up to 5000 parts per million (ppm) by volume of oxygen. Although the environment in which the activation process is conducted will typically contain less than 5000 ppm by volume of oxygen, a small amount of oxygen is nonetheless necessary to produce the required ash content.

The process for preparing the activated carbon comprises treating carbon produced from the combustion of coconut shells to an activation process in which it is heated to a temperature in the range of from 1000 to 3500 °C in an environment containing less than 5000 ppm by volume of oxygen for a time in the range of from 10 to 50 minutes.

The activation process is typically conducted using a superheated gas, preferably superheated steam, and in a preferred embodiment is conducted at a temperature in the range of from 2000 to 3500°C, more preferably in the range of from 2800 to 3100°C and particularly in the range of from 2950 to 3000°C.

The duration of the activation process has also been found to be important and is preferably conducted for a time in the range of from 15 to 45 minutes, more preferably in the range of from 25 to 35 minutes and particularly in the range of from 28 to 32 minutes. Obviously, the duration of the activation process to which the coconut shell carbon is subjected will to some extent depend on the temperature employed in the process. However, the duration of the activation process is typically considerably longer than the duration of conventional activation processes and unlike conventional activation processes the aim is to produce an activated carbon having the required ash content. In conventional activation processes, the aim is to avoid ash formation altogether.

The environment in which the activation process is conducted contains from 1 to 2000, preferably from 1 to 500 and particularly from 5 to 50 ppm by volume of oxygen.

The activation process may be conducted in any suitable activation furnace or kiln of the type which is commercially used to prepare the known granular form of activated carbon.

The conversion of the activated carbon of the invention to a platelet Form can be accomplished by the known industrial process of chellation.

In a preferred embodiment, the water purification system further comprises a porous ceramic filter clement comprising a plurality of pores, a proportion of which pores are partially occluded with particles having a size across their largest dimension which is smaller than the size of the pores across their largest dimension to give pores having an effective size across their largest dimension which is smaller than the true size across their largest dimension.

It has been found that the porous ceramic element may provide for effective bacterial control along with an acceptable rate of water flow under normal water pressure conditions

The porous ceramic element typically comprises pores having a mean size across their largest dimension in the range of from 0.2 to 1.2 μm, preferably in the

range of from 0.2 to 0.9 μm, more preferably in the range of from 0.3 to 0.8 and particularly in the range of from 0.5 to 0.7 μm.

The porous ceramic element also preferably has a total porosity in the range of from 30 to 80 %, preferably in the range of from 45 to 75 %, more preferably in the range of from 50 to 70 % and particularly in the range of from 58 to 62 %.

A proportion of the pores in the ceramic element are partially occluded with particles. Typically, these particles have a mean size across their largest dimension in the range of from 0.1 to 1.0 μm, preferably in the range of from 0.2 to 0.5 μm and particularly in the range of from 0.3 to 0.4 μm to give pores having an effective mean size across their largest dimension in the range of from 0.09 to 0.7 μm, preferably in the range of from 0.2 to 0.5 μm, more preferably in the range of from 0.2 to 0.4 μm and particularly in the range of from 0.2 to 0.35 μm. In this way, the filtering capability of the ceramic element is enhanced because the partially occluded pores can provide for the removal of foreign materials contained in water down to the effective pore size. Preferably the occluding particles are substantially spherical in shape.

The pores in the ceramic element preferably have a generally eye shaped cross-section and the occluding particles arc preferably substantially spherical and of a size that they lodge in the corners of the eye shaped pores in the ceramic element.

The porous ceramic element can be made from porous ceramic filter elements of the type that are conventionally used for the purification of water. These elements typically have pore sizes in the range of from 0.3 to 0.9 μm, e.g. in the range of from 0.5 to 0.7 μm.

The partial occlusion of some of the pores in the ceramic element may be achieved by means of a discrete processing step which is conducted before the element is put to its intended use.

However, when the ceramic element is to be incorporated in a water purification system, the partial occlusion is preferably conducted in situ by connecting the ceramic element and a filter containing the activated carbon of the first aspect of the present invention in series so that the ceramic ëlement is located downstream of the filter containing the activated carbon. In this way, water passing through the filter containing the activated carbon entrains at least some of the insoluble ash particles contained in the activated carbon and carries these particles to the porous ceramic element where they are deposited in the pores located in the regions of the element where the water enters thereby providing for partial occlusion of those pores.

The activated carbon filter and the ceramic filter element are connected in series, e.g. by an arrangement of conduits, with the ceramic filter etement being located downstream of the activated carbon filter so that in use water passes sequentially through the activated carbon filter and then through the ceramic filter element.

The activated carbon filter typically takes the form of a filter cartridge comprising a chamber which contains the activated carbon as a bed or layer. The filter cartridge is preferably cylindrical. The activated carbon may form a bed in the filter cartridge and the configuration of the cartridge may be such that in use water is caused to flow longitudinally through the bed of activated carbon as it passes from one end of the cartridge to the other. Alternatively, the filter cartridge may have a tubular configuration in which the activated carbon forms an annular layer between inner and outer sleeves of a porous, water permeable material so that in use water is caused to flow laterally through the activated carbon as it passes from the inside of the filter cartridge to the outside or vice versa. The filter cartridge may be provided with an inlet and outlet connector to which conduits for conveying water to and from the cartridge can be attached. Alternatively, the filter cartridge may be adapted to fit into a filter housing which is provided with the inlet and outlet connectors and is adapted to convey water to and from the filter cartridge containing the activated carbon.

The ceramic filter element also typically locates in a filter housing comprising inlet and outlet connectors for connection to conduits for conveying water to and from the filter. The. ceramic filter element is preferably treated with a sterilising agent, usually silver, to prevent microorganisms from colonising the element.

When the preferred water purification system of the present invention is used for the first time, a proportion of the insoluble ash particles contained in. the activated carbon are entrained by the water flowing through the activated carbon and are transported to the porous ceramic element where they are deposited to produce a porous ceramic element in which a proportion of the pores in the ceramic element arc partially occluded by the ash particles. The pores which are partially occluded tend to reside in the region where the water being purified enters the ceramic element.

The redox alloy that is employed in the water purification system is a granular material and is preferably an alloy of zinc and copper. Preferred redox alloys of zinc and copper are those comprising from 30 to 70 weight % of the zinc and from 70 to 30 weight % of the copper, more preferably from 40 to 60 weight % of the zinc and from 60 to 40 weight % of the copper and particularly about 50 weight % of both zinc and copper. An especially preferred redox alloy of zinc and copper is that sold under the trade mark KDF-55 (available from KDF Fluid Systems Inc).

The redox alloy filter typically forms part of a filter cartridge comprising a chamber which contains the redox alloy as a bed or layer. The filter cartridge is preferably cylindrical. The redox alloy may form a bed in the filter cartridge and the configuration of the cartridge may be such that in use water is caused to flow longitudinally through the bed of redox alloy as it passes from one end of the cartridge to the other. Alternatively, the filter cartridge may have a tubular configuration in which the redox alloy forms an annular layer between inner and outer sleeves of a porous, water permeable material so that in use water is caused to flow laterally through the redox alloy as it passes from the inside of the filter cartridge to the outside or vice versa. The filter cartridge may be provided with an inlet and outlet connector to which conduits for conveying water to and from the cartridge can be attached. Alternatively, the filter cartridge may be adapted to fit into a filter housing which is provided with the inlet and outlet connectors and is adapted to convey water to and from the filter cartridge containing the redox alloy.

We do not, of course, exclude the possibility that the redox alloy filter and the activated carbon filter of the second aspect of the present invention may be incorporated into a single filter cartridge, and it is a simple matter to arrange the beds or layers of redox alloy and activated carbon so that the water being purified flows firstly through the redox alloy and then through the activated carbon.

In conventional water purification systems, redox alloys, which are used to remove toxic metal ions and chlorine, can only be used in small quantities because they release zinc and copper into the water which are themselves detrimental to human health. In contrast, we have found that redox alloys can be used in much greater quantities in the water purification system of the present invention, therefore allowing for the removal of much greater quantities of toxic metal ions and chlorine, because the activated carbon filter which follows die redox alloy filter can sequester or mop up the metals, particularly zinc and copper, which are released into the water by the redox alloy.

The water purification system also preferably comprises a second activated carbon filter which is located downstream of the ceramic filter element so that in use water exiting the ceramic filter element passes onto the second activated carbon filter. The activated carbon which is used in the second activated carbon filter should be of the type which is conventionally used in water purification systems for removing organic compounds and is typically cast into a porous block.

The second activated carbon filter typically locates in a filter housing comprising inlet and outlet connectors for connection to conduits for conveying water to and from the filter.

As stated above, the activated carbon which is used in the second activated carbon filter is typically of a type which is conventionally used in water purification systems for removing organic compounds. However, in conventional water purification systems this type of activated carbon is typically consumed very quickly by removing the chlorine contained in the water. As a result, its effectiveness is very short lived. However, in the water purification system of the present invention, the redox alloy can be used in sufficient quantities to remove all or substantially all of the chlorine so freeing the second activated carbon filter to deal with organics only. These organics include the organic components of any bacteria which decompose within the ceramic element such as endotoxins.

It will be appreciated from the above that a preferred water purification system comprises in sequence (1) a redox alloy filter, (2) an activated carbon filter, (3) a ceramic filter element and (4) a second activated carbon filter which are arranged so that in use water passes sequentially through filters (1), (2), (3) and (4). These filters may be incorporated into a single filter cartridge.

The water purification system may further comprise an anion resin filter. Where used, this filter will typically be located between the ceramic filter element and the second activated carbon filter.

The water purification system of the present invention may also comprise a pre-filter for removing larger particulate matter, such as sand, grit, rust, soot, peat, moss and algae. These particles will typically have a size in the range of from 1 to 100 μm, e.g. in the range of from 5 to 50 μm.

When used, this pre-filter will provide a first coarse filtration step and, therefore, will be located upstream of both the activated carbon filter and the redox alloy filter.

In the water purification system, the weight ratio of redox alloy to activated carbon in the redox alloy filter and activated carbon filter of the second aspect of the present invention is in the range of from 1:1 to 1:2 and particularly in the range of from 1:1.4 to 1:1.6. In an especially preferred embodiment, for each 250 g of redox alloy which is used, 375 g of the activated carbon is used and this amount of carbon will contain sufficient ash to partially occlude 0.054 m2 of a 60% porous ceramic containing pores having a mean size across their largest dimension in the range of from 0.5 to 0.7 μm.

The water purification system of the present invention may also comprise a pump to drive the water to be purified through the arrangement of filters which follow. This pump can be hand operated or powered, e.g. by electricity or an internal combustion engine.

The present invention will now be described by way of example and with reference to the enclosed drawings in which:

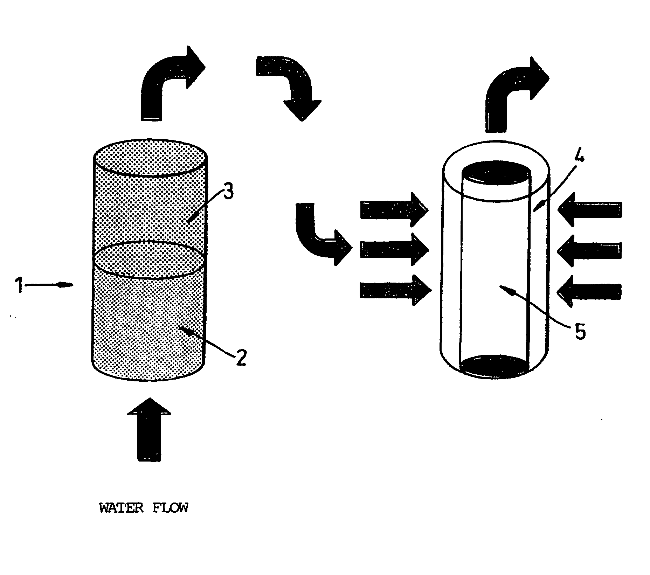

> Figure 1 is a schematic representation of a water purification system of the present invention showing the arrangement of the various filters.

In Figure 1, the water purification system (1) comprises a redox alloy filter (2), an activated carbon filter (3) according to the second aspect of the present invention, a porous ceramic filter element (4) according to the fourth aspect of the present invention and a porous carbon block filter element (5).

The redox alloy filter (2) and the activated carbon filter (3) are combined in a single, cylindrically shaped filter cartridge comprising a chamber in which the activated carbon and the redox alloy are arranged as discrete beds so that in use the water being purified flows longitudinally through the filter beds as it passes from one end of the filter cartridge to the other.

The filter cartridge fits into a first, cylindrically shaped filter housing (not shown) which is provided with inlet and outlet connectors at its ends for connection to conduits for conveying water to and from the filters (not shown). The first filter housing is adapted to convey water to and from the filter cartridge so that it passes firstly through the redox alloy bed and then through the activated carbon bed.

The porous ceramic filter element (4) is cylindrically shaped and has a tubular configuration. The porous carbon block filter element (5) is also cylindrically shaped and is located in the central chamber provided by the tubular ceramic filter element (4). The diameter of the porous carbon block filter element (5) is such that it is a close fit inside the ceramic filter element (4) and the complete filter assembly locates inside a second, cylindrically shaped filter housing (not shown) comprising inlet and outlet connectors for connection to conduits for conveying water to and from the filters (not shown). The second filter housing is adapted so that water is caused to pass laterally through the ceramic filter element (4) and then onto the carbon filter element (5) where it flows in a generally longitudinal direction towards the outlet end of the filter housing.

The first filter housing containing the redox alloy filter (2) and the activated carbon filter (3) and the second filter housing containing the porous ceramic filter element (4) and the porous carbon block filter element (5) are connected in series by an arrangement of conduits (not shown) with the second filter housing being located downstream of the first filter housing so that in use water passes sequentially through the redox alloy filter (2), the activated carbon filter (3), the porous ceramic filter element (4) and the porous carbon block filter element (5). The first filter housing is then connected to a source of water to be purified.

In use the flow of water through the water purification system is generally as shown by the emboldened arrows.

The present invention is now illustrated but not limited with reference to the following examples.

Example 1

The water purification system described above with reference to Figure 1 was used to purify 10,000 litres of tap water contaminated with the following impurities.

Chlorine ($Cl_2^-$) ions - 10 mg/l
Iron ($Fe^{2+}$) ions - 50 mg/l
Lead ($Pb^{2+}$) ions - 100 μg/l
Aluminium ($Al^{3+}$) - 100 μg/l
Chloroform - 10 mg/l
Trichloroethane - 10 mg/l

The activated carbon filter (3) comprised a bed of activated carbon platelets which had a mean thickness of about 0.1 mm, a mean particle size across their largest dimension of about 0.5 mm and an aspect ratio of about 5:1. The activated carbon contained particles of water insoluble ash in an amount of about 6.0 % by weight as determined in accordance with ASTM 2866. The ash particles were substantially spherical having a mean size across their largest dimension of about 0.3 μm. The activated carbon also had the following properties:

An iodine number of about 1300 mg/g.
A specific surface area as determined in accordance with the nitrogen BET isotherm of about 1200 m$^2$/g.
A pore volume as determined in accordance with ASTM 3838 of about 0.6 ml/g.
A hardness as determined in accordance with ASTM 3802 of about 99 %.
A K value gold loading as determined in accordance with the AARL method of about 24 mg Au/g.
An R value gold kinetics as determined in accordance with the AARL method of about 58 %.

The redox alloy filter (2) comprised a bed of KDF-55 available from KDF Fluid Systems Inc.

The porous ceramic filter element (4) was a commercially available product available from Fairey Industrial Ceramics under the product code Imperial Supercarb. The filter element comprised generally eye shaped pores having a mean size across their largest dimension of about 0.9 μm. and had a total porosity of about 65 %.

The porous carbon block filter element (5) was a commercially available product available from Ametek Inc under the product code CBC10.

The weight ratio of redox alloy to activated carbon in the redox alloy filter (2) and activated carbon filter (3) was such as to provide 250 g of redox alloy for each 375 g of activated carbon. This amount of carbon contained sufficient ash to partially occlude 0.054 m$^2$ of the porous ceramic filter element (4).

The contaminated tap water was passed through the water purification system at a flow rate of 2 litres/minute and samples of the water obtained from the system were collected at 1000 litre intervals and analysed for impurities using a Merck Spectroquant Kit in conjunction with a UV visible spectrophotometer. After passage through the water purification system, the levels of contaminants in the water were below the limits of detection for each sample, including the final sample taken after all the water had passed through the system.

Example 2

The water purification system described above with reference to Figure 1 was used to purify 1000 litres of tap water contaminated with the following bacteria.

E-coli - 2.5 x 10$^7$ cfu/ml

Salmonella - 2.5 x 10$^7$ cfu/ml

cfu = colony forming units

The activated carbon filter (3) comprised a bed of activated carbon platelets which had a mean thickness of about 0.1 mm, a mean particle size across their largest dimension of about 0.5 mm and an aspect ratio of about 5:1. The activated carbon contained particles of water insoluble ash in an amount of about 6.0 % by weight as determined in accordance with ASTM 2866. The ash particles were substantially spherical having a mean size across their largest dimension of about 0.3 μm. The activated carbon also had the following properties:

An iodine number of about 1300 mg/g.
A specific surface area as determined in accordance with the nitrogen BET isotherm of about 1200 m$^2$/g.
A pore volume as determined in accordance with ASTM 3838 of about 0.6 ml/g.
A hardness as determined in accordance with ASTM 3802 of about 99 %.
A K value gold loading as determined in accordance with the AARL method of about 24 mg Au/g.
An R value gold kinetics as determined in accordance with the AARL method of about 58 %.

The redox alloy filter (2) comprised a bed of KDF-55 available from KDF Fluid Systems Inc.

The porous ceramic filter element (4) was a commercially available product available from Fairey Industrial Ceramics under the product code Imperial Supercarb. The filter element comprised generally eye shaped pores having a mean size across their largest dimension of about 0.9 μm. and had a total porosity of about 65 %.

The porous carbon block filter element (5) was a commercially available product available from Ametek Inc under the product code CBC10.

The weight ratio of redox alloy to activated carbon in the redox alloy filter (2) and activated carbon filter (3) was such as to provide 250 g of redox alloy for each 375 g of activated carbon. This amount of carbon contained sufficient ash to partially occlude 0.054 m$^2$ of the porous ceramic filter element (4).

The contaminated tap water was passed through the water purification system at a flow rate of 2 litres/minute and samples of the water obtained from the system were collected at 100 litre intervals and analysed for bacteria using a standard plate count method. Once 900 litres of the contaminated tap water had passed through the system, it was stopped and allowed to stand for 48 hours. The system was then restarted and the remaining 100 litres of contaminated water passed through the system. This was also sampled and analysed for bacteria using a standard plate count method.

The colony counts for all the samples were nil.

## Claims

1. A water purification system comprising an activated carbon filter and a redox alloy filter which is located upstream of the activated carbon filter so that in use water exiting the redox alloy filter then passes onto the activated carbon filter, wherein the activated carbon is particulate, is able to sequester zinc and copper, contains particles of water insoluble ash in an amount of at least 1 % by weight as determined in accordance with ASTM 2866 and is obtainable by a process which comprises subjecting carbon produced from the combustion of coconut shells to an activation process in which it is heated to a temperature in the range of from 1000 to 3500°C in an environment containing from 1 to 2000 parts per million (ppm) by volume of oxygen for a time in the range of from 10 to 50 minutes, and wherein the weight ratio of redox alloy to activated carbon in the redox alloy filter and the activated carbon filter is in the range of from 1:1 to 1:2.

2. A water purification system as claimed in claim 1, wherein the redox alloy is an alloy of zinc and copper.

3. A water purification system as claimed in claim 1 or claim 2, wherein the redox alloy filter and the activated carbon filter are incorporated into a single filter cartridge.

4. A water purification system as claimed in any one of claims 1 to 3, wherein the weight ratio of redox alloy to activated carbon in the redox alloy filter and activated carbon filter is in the range of from 1:1.4 to 1:1.6.

5. A water purification system as claimed in any one of claims 1 to 4, further comprising a porous ceramic filter element comprising a plurality of pores, a proportion of which pores are partially occluded with particles having a size across their largest dimension which is smaller than the size of the pores across their largest dimension to give pores having an effective size across their largest dimension which is smaller than the true size across their largest dimension, the activated carbon filter and the ceramic filter element being connected in series with the ceramic filter element being located downstream of the activated carbon filter so that in use water passes sequentially through the activated carbon filter and then through the ceramic filter element.

6. A water purification system as claimed in claim 5, wherein the porous ceramic filter element comprises a plurality of pores having a mean size across their largest dimension in the range of from 0.2 to 1.2 $\mu$m, a proportion of which pores are partially occluded with particles having a size across their largest dimension which is smaller than the size of the pores across their largest dimension to give pores having an effective size across their largest dimension which is smaller than the true size across their largest dimension.

7. A water purification system as claimed in claim 6, wherein the porous ceramic filter element has a total porosity in the range of from 30 to 80%.

8. A water purification system as claimed in claim 6 or claim 7, wherein the occluding particles have a mean size across their largest dimension in the range of from 0.1 to 1.0 $\mu$m to give pores having an effective mean size across their largest dimension in the range of from 0.09 to 0.7 $\mu$m.

9. A water purification system as claimed in any one of claims 6 to 8, wherein the pores in the ceramic element have a generally eye shaped cross-section.

10. A water purification system as claimed in any one of claims 6 to 9, wherein the occluding particles are substantially spherical.

11. A water purification system as claimed in any one of the preceding claims, wherein the activated carbon is in platelet form.

12. A water purification system as claimed in claim 11, wherein the platelets of activated carbon have a mean thickness in the range of from 0.02 to 0.2 mm, a mean particle size across their largest dimension in the range of from 0.2 to 0.6 mm and an aspect ratio in the range of from 20:1 to 10:3.

13. A water purification system as claimed in any one of the preceding claims, wherein the ash content of the activated carbon determined in accordance with ASTM 2866 is in the range of from 1 to 20 % by weight.

14. A water purification system as claimed in claim 13, wherein the ash content of the activated carbon determined in accordance with ASTM 2866 is in the range of from 3 to 7 % by weight.

**15.** A water purification system as claimed in any one of the preceding claims, wherein the ash is constituted by substantially spherical particles.

**16.** A water purification system as claimed in claim 15, wherein the ash particles have a mean size across their largest dimension in the range of from 0.1 to 1.0 µm.

**17.** A water purification system as claimed in any one of the preceding claims, wherein the iodine number of the activated carbon is in the range of from 1000 to 1400 mg/g.

**18.** A water purification system as claimed in any one of the preceding claims, wherein the activated carbon has a specific surface area as determined in accordance with the nitrogen BET isotherm method in the range of from 1000 to 1400 m$^2$/g.

**19.** A water purification system as claimed in any one of the preceding claims, wherein the activated carbon has a pore volume as determined in accordance with ASTM 3838 in the range of from 0.5 to 0.7 ml/g.

**20.** A water purification system as claimed in any one of the preceding claims, wherein the activated carbon has a hardness as determined in accordance with ASTM 3802 in the range of from 90 to 100%.

**21.** A water purification system as claimed in any one of the preceding claims, wherein the activated carbon has a K value gold loading as determined in accordance with the AARL method in the range of from 15 to 30 mg Au/g.

**22.** A water purification system as claimed in any one of the preceding claims, wherein the activated carbon has an R value gold kinetics as determined in accordance with the AARL method in the range of from 45 to 75%.

**23.** A water purification system as claimed in any one of the preceding claims, wherein the activated carbon is obtainable from coconut shells by burning the shells to produce carbon and then subjecting the resulting coconut shell carbon to an activation process in which it is superheated in an environment containing from 1 to 500 parts per million (ppm) by volume of oxygen at a temperature of from 2800 to 3100°C.

**24.** A method for purifying water, the method comprising passing the water through a redox alloy filter and then through an activated carbon filter in which the activated carbon is particulate, is able to sequester zinc and copper, contains particles of water insoluble ash in an amount of at least 1 % by weight as determined in accordance with ASTM 2866 and is obtainable by a process which comprises subjecting carbon produced from the combustion of coconut shells to an activation process in which it is heated to a temperature in the range of from 1000 to 3500°C in an environment containing from 1 to 2000 parts per million (ppm) by volume of oxygen for a time in the range of from 10 to 50 minutes, wherein the weight ratio of redox alloy to activated carbon in the redox alloy filter and the activated carbon filter is in the range of from 1:1 to 1:2.

**25.** A method as claimed in claim 24, wherein the redox alloy is an alloy of zinc and copper.

**26.** A method as claimed in claim 24 or claim 25, wherein the weight ratio of redox alloy to activated carbon in the redox alloy filter and activated carbon filter is in the range of from 1:1.4 to 1:1.6.

**27.** A method as claimed in any one of claims 24 to 26, wherein the activated carbon filter contains activated carbon as defined in any one of claims 11 to 23.

**28.** A method as claimed in any one of claims 24 to 27, wherein zinc and copper are released into the water as a result of passing the water through the redox alloy filter and the activated carbon filter then removes the zinc and copper from the water.

**29.** A method as claimed in any one of claims 24 to 28, wherein the water exiting the activated carbon filter is then passed through a porous ceramic filter element as defined in any one of claims 5 to 10.

**Patentansprüche**

**1.** Wasserreinigungssystem mit einem Aktivkohlfilter und einem Redoxlegierungsfilter, der stromauf des Aktivkohlefilters angeordnet ist, so dass in der Verwendung Wasser, das den Redoxlegierungsfilter verlässt, dann durch den Aktivkohlefilter hindurch tritt, wobei die Aktivkohle tellchenförmlg ist, in der Lage Ist, Zink und Kupfer zu maskieren. Tellchen aus wasserunlöslicher Asche in einer gemäß ASTM 2866 bestimmten Mange von mindestens 1 Gewichtsprozent enthält und durch einen Prozess erhältlich ist, der das Unterwerfen von Kohle, die durch die Verbrennung von Kokosnussschalen hergestellt ist, unter einen Aktivierungsprozess aufweist. in dem die Kohle in einer Umgebung, die bezogen auf das Volumen Sauerstoff in 1 bis 2000 Teilen pro Millionen (ppm) enthält, für einen Zeitraum im Bereich von 10 bis 50 min. auf eine Temperatur in dem Bereich von 1000 bis 3500 °C aufgeheizt wird, und wobei das Gewichtsverhältnis von Redoxiegierung zu Aktivkohle in dem Redoxlegierungsfilter und dem Aktivkohlefilter in dem Bereich von 1:1 bis 1:2 liegt.

2. Wasserreinigungssystem nach Anspruch 1, wobei die Redoxlegierung eine Legierung von Zink und Kupfer Ist.

3. Wasserreinigungssystem nach Anspruch 1 oder 2, wobei der Redoxlegierungsfilter und der Aktivkohlefilter in eine einzige Filterpatrone integriert sind.

4. Wasserreinigungssystem nach einem der Ansprüche 1 bis 3, wobei das Gewichtsverhältnis von Redoxlegierung zu Aktivkohle in dem Redoxiegierungsfilter und dem Aktivkohlefilter in dem Bereich von 1:1,4 bis 1:1,6 liegt.

5. Wasserreinigungssystem nach einem der Ansprüche 1 bis 4, das weiterhin ein poröses Keramikfilterelement aufweist, das eine Mehrzahl von Poren aufweist, wobei ein Anteil der Poren teilweise mit Partikeln, die eine Größe über ihre größte Abmessung aufweisen, die kleiner als die Größe der Poren über ihre größte Abmessung ist, verschlossen ist, um Poren zu ergeben, die eine effektive Größe über ihre größte Abmessung aufweisen, die kleiner als die wahre Größe ober ihre größte Abmessung ist, wobei der Aktivkohlefilter und das Keramikfiltere-ment in Reihe geschaltet sind, wobei das Keramik-filterelement stromab des Aktivkohlefilters ange-ordnet ist, so dass in der Verwendung Wasser nacheinander durch den Aktivkohlefilter und durch das Keramikfilterelement hindurch tritt.

6. Wasserreinigungssystem nach Anspruch 5, wobei das poröse Keramikfilterelement eine Mehrzahl von Poren mit einer mittleren Größe ober ihre größte Abmessung In dem Bereich von 0,2 bis 0,1 µm aufweist, wobei ein Anteil der Poren teilweise mit Partikeln, die eine Größe Ober ihre größte Abmessung aufweisen, die kleiner als die Größe der Poren über Ihre größte Abmessung ist verschlossen ist, um Poren zu ergeben, die eine effektive Größe über ihre größte Abmessung aufweisen, die kleiner als die wahre Größe Ober Ihre größte Abmessung ist.

7. Wasserreinigungssystem nach Anspruch 6, wobei das poröse Keramikfilterelement eine Gesamtporosität in dem Bereich von 30 bis 80 % aufweist.

8. Wasserreinigungssystem nach Anspruch 6 oder 7, wobei die verschließenden Artikel eine mittlere Größe über ihre größte Abmessung in dem Bereich von 0,1 bis 1,0 µm aufweisen, um Poren zu ergeben, die eine effektive mittlere Größe über Ihre größte Abmessung In dem Bereich von 0,09 bis 0,7 µm aufweisen.

9. Wasserreinigungssystem nach einem der Ansprüche 6 bis 8, wobei die Poren in dem Keramikelement allgemein einen augenförmigen Querschnitt aufweisen.

10. Waaserreinigungssystam nach einem der Ansprüche 6 bis 9, wobei die verschießenden Partikel im Wesentlichen sphärisch sind.

11. Wasserreinigungssystem nach einem der vorangehenden Ansprüche, wobei die Aktivkohle schichtförmig ist.

12. Wasserreinigungssystem nach Anspruch 11, wobei die Schichten der Aktivkohle eine mittlere Dicke in dem Bereich von 0,02 bis 0,2 mm, eine mittlere Partikelgröße über Ihre größte Abmessung In dem Bereich von 0,2 bis 0,6 mm und ein Seitenverhältnis in dem Bereich von 20:1 bis 10:3 aufweisen.

13. Wasserreinigungssystem nach einem der vorangehenden Ansprüche, wobei der gemäß ASTM 2866 bestimmte Aschegehalt der Aktivkohle in dem Bereich von 1 bis 20 Gewichtsprozent liegt

14. Wasserreininungssystem nach Anspruch 13, wobei der gemäß ASTM 2866 bestimmte Aschagehalt der Aktivkohle in dem Bereich von 3 bis 7 Gewichtsprozent liegt.

15. Wasserreinigungssystem nach einem der vorangehenden Ansprüche, wobei die Asche durch im Wesentlichen sphärische Partikel ausgebildet ist.

16. Wasserreinigungssystem nach Anspruch 15, wobei die Aschepartikel eine mittlere Größe über ihre größte Abmessung in dem Bereich von 0,1 bis 1,0 µm aufweisen.

17. Wasserreinigungssystem nach einem der vorange-henden Ansprüche, wobei die Iodzahl der Aktivkoh-le in dem Bereich von 1000 bis 1400 mg/g liegt.

18. Wasserreinigungssystem nach einem der vorangehenden Ansprüche, wobei die Aktivkohle eine ge-mäß der BET-Stickstoffisothermenmethode be-stimmte spezifische Oberflächenfläche in dem Bereich von 1.000 bis 1.400 m$^2$/g aufweist.

19. Wasserreinigungssystem nach einem der vorangehenden Ansprüche, wobei die Aktivkohle ein gemäß ASTM 3838 bestimmtes Porenvolumen in dem Bereich von 0.5 bis 0.7 ml/g aufweist.

20. Wasserreinigungssystem nach einem der vorangehenden Ansprüche, wobei die Aktivkohle eine gemäß ASTM3802 bestimmte Harte in dem Bereich von 90 bis 100 % aufweist,

**21.** Wasserreinigungssystem nach einem der vorangehenden Ansprüche, wobei die Aktivkohle einen gemäß der AARL-Methode bestimmten K-Wert der Goldbeladung in dem Bereich von 15 bis 30 mg Au/g aufweist.

**22.** Wasserreinigungssystem nach einem der vorangehenden Ansprüche, wobei die Aktivkohle einen gemäß der AARL-Methode bestimmten R-Wort der Goldkinetik in dem Bereich von 45 bis 75 % aufweist.

**23.** Wasserreinigungssystem nach einem der vorangehenden Ansprüche, wobei die Aktivkohle erhältlich ist von Kokosnusschalen durch Verbrennen der Schalen, um Kohle herzustellen und anschließendes Unterwerfen der resultierenden Kokosnussschalenkohle unter einen Aktivierungsprozess, in dem Sie in einer Umgebung, die bezogen auf das Volumen Sauerstoff in 1 bis 500 Teilen pro Millionen (ppm) enthält, bei einer Temperatur von 2800 bis 3100 °C überhitzt wird.

**24.** Verfahren zum Reinigen von Wsaser, wobei das Verfahren das Hindurchführen des Wassers durch einen Redoxiegierungsfilter und dann durch einen Aktivkohlefilter aufweist, in dem die Aktivkohle teilchenförmig ist, in der Lage ist, Zink und Kupfer zu maskleren, Partikel von wasserunlöslicher Asche in einer gemäß ASTM 2868 bestimmten Menge von mindestens 1 Gewichtsprozent enthält und clurch einen Prozess erhältlich ist, der das Unterwerfen von Kohle, die durch die Verbrennung von Kokosnusschalen hergestellt ist, unter einen Aktivierungsprozess aufweist, in dem sie in einer Umgebung, die bezogen auf das Volumen Sauerstoff in 1 bis 2000 Teile pro Millionen (ppm) enthält, für einen Zeitraum in dem Bereich von 10 bis 50 min, auf eine Temperatur in dem Bereich von 1000 bis 3500 °C aufgeheizt wird. wobei das Gewichtsverhältnis von Redoxiegierung zu Aktivkohle in dem Redoxiegierungsfilter und dem Aktivkohlefilter in dem Bereich von 1:1 bis 1:2 liegt.

**25.** Verfahren nach Anspruch 24, wobei die Redoxiegierung eine Legierung von Zink und Kupfer ist.

**26.** Verfahren nach Anspruch 24 oder 25, wobei das Gewichtsverhältnis von Redoxiegierung zu Aktivkohle in dem Redoxiegierungsfilter und dem Aktivkohlefilter in dem Bereich von 1:1,4 bis 1:1,6 liegt.

**27.** Verfahren nach einem der Ansprüche 24 bis 26, wobei der Aktivkohlefilter Aktivkohle enthält, wie sie in einem der Ansprüche 11 bis 23 definiert Ist.

**28.** Verfahren nach einem der Ansprüche 24 bis 27, wobei als Resultat des Hindurchführens des Wassers durch den Redoxiegierungsfilter Zink und Kupfer in das Wasser freigesetzt werden und der Aktivkohlefilter dann das Zink und das Kupfer aus dem Weaser entfernt.

**29.** Verfahren nach einem der Ansprüche 24 bis 26, wobei das Wasser, das den Aktivkohlefilter verlässt, dann durch ein poröses Keramikfilterelement hindurchgeführt wird, wie es in einem der Ansprüche 5 bis 10 definiert ist.

**Revendications**

**1.** Système de purification d'eau comprenant un filtre à charbon actif et un filtre à alliage redox qui est situé en amont du filtre à charbon actif de sorte que lors de l'utilisation, l'eau sortant du filtre à alliage redox passe ensuite sur le filtre à charbon actif, dans lequel le charbon actif est particulaire, est capable de séquestrer du zinc et du cuivre, contient des particules de cendre insolubles dans l'eau en une quantité d'au moins 1 % en poids, déterminée selon ASTM 2866, et peut être obtenu par un procédé qui comprend le fait de soumettre du charbon produit par la combustion de coquille de noix de coco à un procédé d'activation dans lequel il est chauffé à une température dans la fourchette de 1000 à 3500 °C dans un environnement contenant de 1 à 2000 parties par million (ppm) en volume d'oxygène pendant une durée dans la fourchette de 10 à 50 minutes et dans lequel la proportion pondérale d'alliage redox par rapport au charbon actif dans le filtre à alliage redox et le filtre à charbon actif est dans la fourchette de 1 : 1 à 1 : 2.

**2.** Système de purification d'eau selon la revendication 1, dans lequel l'alliage redox est un alliage de zinc et de cuivre.

**3.** Système de purification d'eau selon la revendication 1 ou la revendication 2, dans lequel le filtre à alliage redox et le filtre au charbon actif sont incorporés dans une cartouche de filtre unique.

**4.** Système de purification d'eau selon l'une quelconque des revendications 1 à 3, dans lequel la proportion pondérale d'alliage redox par rapport au charbon actif dans le filtre à alliage redox et le filtre au charbon actif est dans la fourchette de 1 : 1,4 à 1 : 1,6.

**5.** Système de purification d'eau selon l'une quelconque des revendications 1 à 4, comprenant en outre un élément de filtre céramique poreux comprenant une pluralité de pores, une proportion desquels pores étant partiellement obstrués par des particules ayant une taille dans leur plus grande dimension qui est inférieure à la taille des pores dans leur plus grande dimension afin de donner des pores ayant une taille effective dans leur plus grande dimension qui soit inférieure à la taille réelle dans leur plus grande dimension, le filtre à charbon actif et l'élément de filtre céramique étant connectés en série, l'élément de filtre céramique étant situé en aval du filtre à charbon actif de sorte que lors de l'utilisation, l'eau passe successivement à travers le filtre à charbon actif, puis à travers l'élément de filtre céramique.

6. Système de purification d'eau selon la revendication 5, dans lequel l'élément de filtre céramique poreux comprend une pluralité de pores ayant une taille moyenne dans leur plus grande dimension dans la fourchette de 0,2 à 1,2 μm, une proportion desquels pores étant partiellement obstrués par des particules ayant une taille dans leur plus grande dimension qui est inférieure à la taille des pores dans leur plus grande dimension afin de donner des pores ayant une taille effective dans leur plus grande dimension qui soit inférieure à la taille réelle dans leur plus grande dimension.

7. Système de purification d'eau selon la revendication 6, dans lequel l'élément de filtre céramique poreux a une porosité totale dans la fourchette de 30 à 80 %.

8. Système de purification d'eau selon la revendication 6 ou la revendication 7, dans lequel les particules obstruantes ont une taille moyenne dans leur plus grande dimension dans la fourchette de 0,1 à 1,0 μm afin de donner des pores ayant une taille effective dans leur plus grande dimension dans la fourchette de 0,09 à 0,7 μm.

9. Système de purification d'eau selon l'une quelconque des revendications 6 à 8, dans lequel les pores dans l'élément céramique ont une section généralement en forme d'oeil.

10. Système de purification d'eau selon l'une quelconque des revendications 6 à 9, dans lequel les particules obstruantes sont sensiblement sphériques.

11. Système de purification d'eau selon l'une quelconque des revendications précédentes, dans lequel le charbon actif se présente sous forme de lamelles.

12. Système de purification d'eau selon la revendication 11, dans lequel les lamelles de charbon actif ont une épaisseur moyenne dans la fourchette de 0,02 à 0,2 mm, une taille de particule moyenne dans leur plus grande dimension dans la fourchette de 0,2 à 0,6 mm et un rapport de longueur de 20 : 1 à 10 : 3.

13. Système de purification d'eau selon l'une quelconque des revendications précédentes, dans lequel la teneur en cendres du charbon actif déterminée selon ASTM 2866 est dans la fourchette de 1 à 20 % en poids.

14. Système de purification d'eau selon la revendication 13, dans lequel la teneur en cendre du charbon actif déterminée selon ASTM 2866 est dans la fourchette de 3 à 7 % en poids.

15. Système de purification d'eau selon l'une quelconque des revendications précédentes, dans lequel la cendre est constituée de particules sensiblement sphériques.

16. Système de purification d'eau selon la revendication 15, dans lequel les particules de cendre ont une taille moyenne dans leur dimension la plus grande dans la fourchette de 0,1 à 1,0 μm.

17. Système de purification d'eau selon l'une quelconque des revendications précédentes, dans lequel l'indice d'iode du charbon actif se situe dans la fourchette de 1000 à 1400 mg/g.

18. Système de purification d'eau selon l'une quelconque des revendications précédentes, dans lequel le charbon actif a une surface spécifique telle que déterminée selon le procédé de l'isotherme d'adsorption BET de l'azote dans la fourchette de 1000 à 1400 m$^2$/g.

19. Système de purification d'eau selon l'une quelconque des revendications précédentes, dans lequel le charbon actif a un volume de pore tel que déterminé selon ASTM 3838 dans la fourchette de 0,5 à 0,7 ml/g.

20. Système de purification d'eau selon l'une quelconque des revendications précédentes, dans lequel le charbon actif a une dureté telle que déterminée selon ASTM 3802 dans la fourchette de 90 à 100 %.

21. Système de purification d'eau selon l'une quelconque des revendications précédentes, dans lequel le charbon actif a une charge d'or de valeur K telle que déterminée selon le procédé AARL dans la fourchette de 15 à 30 mg de Au/g.

22. Système de purification d'eau selon l'une quelconque des revendications précédentes, dans lequel le charbon actif a une cinétique de l'or de valeur R telle que déterminée selon le procédé AARL dans la fourchette de 45 à 75 %.

23. Système de purification d'eau selon l'une quelconque des revendications précédentes, dans lequel le charbon actif peut être obtenu à partir de coquilles de noix de coco en brûlant les coquilles afin de produire du charbon, puis en soumettant le charbon de coquilles de noix de coco obtenu à un procédé d'activation dans lequel il est surchauffé dans un environnement contenant de 1 à 500 parties par million (ppm) en volume d'oxygène à une température de 2800 à 3100 °C.

24. Procédé de purification d'eau, le procédé comprenant un passage de l'eau à travers un filtre à alliage redox, puis à travers un filtre à charbon actif dans lequel le charbon actif est particulaire, est capable de séquestrer du zinc et du cuivre, contient des particules de cendre insolubles dans l'eau en une quantité d'au moins 1 % en poids, déterminée selon ASTM 2866, et peut être obtenu par un procédé qui comprend le fait de soumettre du charbon produit par la combustion de coquilles de noix de coco à un procédé d'activation dans lequel il est chauffé à une température dans la fourchette de 1000 à 3500 °C dans un environnement contenant de 1 à 2000 parties par million (ppm) en volume d'oxygène pendant un temps dans la fourchette de 10 à 50 minutes, dans lequel la proportion pondérale d'alliage redox par rapport au charbon actif dans le filtre à alliage redox et le filtre à charbon actif est dans la fourchette de 1 : 1 à 1 : 2.

25. Procédé selon la revendication 24, dans lequel l'alliage redox est un alliage de zinc et de cuivre.

26. Procédé selon la revendication 24 ou la revendication 25, dans lequel la proportion pondérale d'alliage redox par rapport au charbon actif dans le filtre à alliage redox et dans le filtre à charbon actif est dans la fourchette de 1 : 1,4 à 1 : 1,6.

27. Procédé selon l'une quelconque des revendications 24 à 26, dans lequel le filtre à charbon actif contient du charbon actif selon l'une quelconque des revendications 11 à 23.

28. Procédé selon l'une quelconque des revendications 24 à 27, dans lequel du zinc et du cuivre sont libérés dans l'eau du fait du passage de l'eau à travers le filtre à alliage redox, et le filtre à charbon actif élimine ensuite le zinc et le cuivre de l'eau.

29. Procédé selon l'une quelconque des revendications 24 à 28, dans lequel l'eau sortant du filtre à charbon actif est ensuite passée à travers un élément de filtre céramique poreux selon l'une quelconque des revendications 5 à 10.

1

3

2

WATER FLOW

4

5